# EUROPEAN PATENT APPLICATION

(11) **EP 1 145 653 A1**
(43) Date of publication of application: **17.10.2001**
(21) Application number: 00107856.7
(22) Date of filing: 12.04.2000
(51) Int. Cl.: A23N 5/00

(54) **Method for cracking candle nuts**

(71) Applicant: PT Aneka Messer Industrial Gases Kawasan Industri Jababeka II, Cikarang, Bekasi 17550 (ID)
(72) Inventor: Jalil, Abdul, d/a H. Abdul Rahman Aly, Nganjuk, Jawa Timur (ID); Ramelan, Emong Emma, Cipayung Jakarta Timur (ID); Murtiasrini, Retno, Magelang 56117 (ID)
(74) Representative: Staudt, Armin, Dipl.-Ing., Messer Griesheim GmbH

(57) **Abstract**

It order to provide a method for cracking of candle nuts with a short processing time and resulting in a good quality product at a high yield, it is suggested that the candle nuts (4) are shock frozen in a cooling bath (2) of a liquified cryogenic gas

## Description

Candle nut ("*Aleurites molluccana, Wild*") is a plant from Malaya. This plant is one of the *Euphobiaceae* family, *Aleurites genus* and has six species that spread in tropic and sub-tropic countries. In Germany candle nut is known as "Belgaum walnut" and in Indonesia it is called "kemiri". This plant has an important economic value and good prospect for daily use. People can use its seeds for spice, the bark for medicine, the oil sees for soap, paint, cosmetics, industrial batik and the wood for matches.

Until now there are several traditional ways to crack the shell. For example the nuts are exposed to the sun for 7 days and than the shell is cracked by hitting with an hammer. This method needs a long processing time and the yield of good quality candle nut is only about 40 %.

In another known method for cracking the shell the candle nuts is fried in sand before milling. However by using this method the candle nut becomes brownish and are not attractive and the usable oil content of the nuts is reduced, so that the yield of the whole candle nut is only about 35 %.

In a further known method the candle nuts are cracked one by one using a hammer. This method needs much more time and the percentage of the whole yield is only 30 %.

The traditional methods for removing the shell of candle nuts are not suitable to achieve the quantity and the quality demanded by the market.

Therefore it is an object of this invention to provide a method for cracking of candle nuts with a short processing time and resulting in a good quality product at a high yield.

This object is achieved by a method, which is characterised in that the candle nuts are shock frozen in a liquified cryogenic gas.

A cryogenic gas in this context means liquified gases like nitrogen, oxygen, carbon dioxide, noble gases or air. In the context of this invention "shock freezing" means rapid cooling by using a liquified cryogenic gas.

By shock freezing the outer shell and inner part of the shell ("inner shell") of the candle nuts becomes a frozen solid and brittle, but the inner part of the candle nuts remain unfrozen so that the shell can be easily removed, so that the damage of the inner part can be avoided. This gives a good quality result and a high yield.

Furthermore, by the shock freezing mechanical stresses are induced in the outer shell which usually cause it to crack open automatically. Therefore the cracking of the candle nuts needs only a short processing time. The processing time is further reduced since a plurality of nuts can be treated at the same time.

It is preferred that the candle nuts are held at a first temperature in the range between 0 °C and 50 °C and after that they are rapidly cooled by contact with the liquified cryogenic gas, having a temperature lower than -180 °C. The first temperature range represents a temperature about ambient temperature. The difference between ambient temperature and a temperature lower than -180 °C is high enough to cause the cracking of the shell and it does not require a lot of work and energy to treat candle nuts having ambient temperature by shock freezing.

If was found most suitable to provide a cooling bath of the liquified cryogenic gas and to immerse the candle nuts into the bath. Using a cooling bath ensures an effective cooling at reasonable low costs. Furthermore it allows a reproducible treatment of a plurality of candle nuts at the same time.

It was found most advantageous in this context that a plurality of candle nuts are filled in a porous basket and the basked is immersed into the cooling bath of the liquified cryogenic gas. Using of a basket simplifies the immersing of a plurality of the candle nuts into the bath and the removing out of them from the bath. Furthermore it allows to establish a fixed treating time in the cooling bath. In order to enable an direct contact of the liquified cryogenic gas with the candle nuts, a porous basket is preferred.

It was found suitable to use liquid nitrogen as liquified cryogenic gas. Liqiud nitrogen is easy to handle and not very cost intensive. At atmospheric pressure the boiling point of liqiud nitrogen is -196 °C.

The most preferred treating period during which the candle nuts are in contact with the liquified cryogenic gas is in the range between 10 seconds and 150 seconds. This treating period is sufficient that all or at least most of the shells crack.

Additional features and advantages of the invention ensue from the description provided below, where an embodiment is explained in more detail by reference to the drawing. In the drawing
- **Figure 1**: shows a schematic presentation of a basket filled with candle nuts, which is immersed into a cooling bath of liquid nitrogen and
- **Figure 2**: shows a schematic view of a cross section of a single candle nut after immersion into the cooling bath.

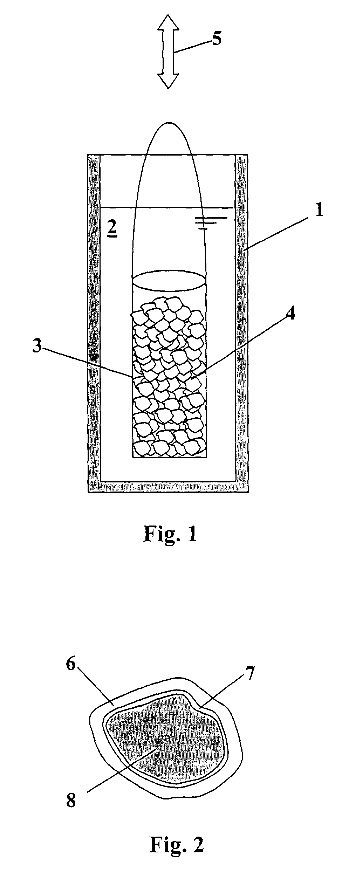

In **Figure 1** the designation number 1 indicates a dewar containing a cooling bath 2 of liquid nitrogen having a temperature of -196 °C. A basket 3 made of stainless steel wires is immersed into the cooling bath 2. The basket 3 is filled with candle nuts 4. It can be moved up and down as is indicated by the arrow 5.

In the following an embodiment of the method according to the invention will be disclosed by reference to Figure 1:

### Example 1

A half of a kilo of candle nuts 4 having ambient temperature (about 25 °C) is filled into the stainless steel basket 3. The candle nuts 4 are immersed into the cooling bath 2 of liquid nitrogen by moving the basket 3 downwards into the dewar 1.

In the cooling bath 2 the candle nuts 4 are rapidly cooled to a temperature of about -196 °C. Due to this shock freezing mechanical stresses are induced in the outer shell of the candle nuts 4 which cause the shell to crack.

The cooling procedure is stopped after an immersing time of 80 seconds by pulling up the basket 3. The outer shell of nearly all of the candle nuts 4 is cracked; but the inner part of the candle nuts 4 remains unfrozen.

**Figure 2** is showing a cross section of a single candle nut after this treatment. The outer shell 6 as well as the thin inner shell 7 are frozen and brittle. The inner part 8 however is unfrozen. The outer shell 6 and the inner shell 7 can be removed easily by means of a milling machine.

The total yield of the candle nuts is 82.3 %. For treating candle nuts according to the method of the invention, the liquid nitrogen consumption is 0.9 kg per kilo candle nuts.

## Claims

1. Method for cracking the shell of candle nuts (4), **characterised in that** the candle nuts (4) are shock frozen in a liquified cryogenic gas.

2. Method according to claim 1, **characterised in that** the candle nuts (4) are held at a first temperature in the range between 0 °C and 50 °C and after that it is rapidly cooled by contact with the liquified cryogenic gas, having a temperature lower than -180 °C.

3. Method according to claim 1 or claim 2, **characterised in that** a cooling bath (2) of the liquified cryogenic gas is provided and that the candle nuts (4) are immersed into the bath.

4. Method according to claim 3, **characterised in that** the candle nuts (4) are filled in a porous basket (3) and the basked (3) is immersed into the bath (2) of the liquified cryogenic gas .

5. Method according to one of the claims 1 to 4, **characterised in that** the liquified cryogenic gas is liquid nitrogen.

6. Method according to one of the claims 1 to 5, **characterised in that** the candle nuts (4) are in contact with the liquified cryogenic gas for a period time between 10 seconds and 150 seconds.
